# EUROPEAN PATENT APPLICATION

(11) **EP 3 973 790 A1**
(43) Date of publication of application: **30.03.2022**
(21) Application number: 20809570.3
(22) Date of filing: 18.05.2020
(51) Int. Cl.: A23L 2/54

(54) **PRESSURE-REGULATING TYPE SUB-MACHINE OF SODA MACHINE**

(30) Priority: 20.05.2019 CN 201920729409 U
(71) Applicant: Guan, Jinye, Guangdong 529300 (CN)
(72) Inventor: Guan, Jinye, Guangdong 529300 (CN)
(74) Representative: Sánchez Margareto, Carolina
(86) International application number: PCT/CN2020/090847
(87) International publication number: WO 2020/233545

(57) **Abstract**

A pressure-regulating-type sub-machine of a soda machine is provided, comprising a positioning seat, a sub-machine upper housing, a sub-machine main body, a sub-machine bottom cover, a conical ring, a water bottle connecting port, a gas nozzle rod, and a soda bottle; wherein the sub-machine upper housing further comprises an arc-shaped guide cavity having an upper opening and provided at the edge of the top, a fixed shaft, an arc-shaped rack, a middle transmission wheel, and a driving gear; the arc-shaped guide cavity has a radial outer side wall provided with a guide groove having an upper opening and a radial inner side wall provided with a through hole; the middle transmission wheel comprises an upper gear and a lower gear; the arc-shaped rack is slidably fitted with the arc-shaped guide cavity, the middle transmission wheel is rotatably fitted with the fixed shaft, and the arc-shaped rack meshes with the lower gear; the driving gear is fixedly connected to the upper end of an adjustment nut, the driving gear meshes with the upper gear, and an operating rod is slidably fitted with the guide groove; and the lower end of the positioning seat and the guide groove form a guide hole. The arc-shaped rack is rotated to drive the middle transmission wheel, and the middle transmission wheel drives the adjustment nut, thereby achieving the purpose of preparing soda having different concentrations by adjusting an elastic force of a spring, which is convenient to use.

## Description

### TECHNICAL FIELD

The present Patent relates to a soda machine, in particular to a sub-machine of a soda machine.

### BACKGROUND

At present, in the prior art, a sub-machine of a soda machine comprises a positioning seat, a sub-machine upper housing, a sub-machine main body, a sub-machine bottom cover, a conical ring, a water bottle connecting port, an gas nozzle rod and a soda bottle. The sub-machine main body is provided with an air inlet seat, an air outlet cavity communicated with the air inlet seat, a safety valve and a pressure relief valve. The pressure relief valve comprises a pressure relief valve body, a valve core, a pressure spring and an adjustment nut which are provided on the sub-machine main body. A vent hole is provided on the pressure relief valve body. The valve core, the pressure spring and the adjustment nut are provided in the pressure relief valve body from bottom to top. The adjustment nut is screwed with the internal thread at the upper end of the pressure relief valve body. The sub-machine main body is provided in the sub-machine upper housing. The upper part of the sub-machine main body extends out of the upper housing. The outer edgefold of the conical ring is provided on the bottom plate of the counterbore surrounding the air outlet cavity. The upper end of the water bottle connecting port presses the outer edgefold. The sub-machine bottom cover is connected with the lower end of the sub-machine upper housing and the water bottle connecting port. The positioning seat is connected with the sub-machine upper housing. The upper end of the gas nozzle rod passes through the conical ring and is connected with the air inlet cavity through an air inlet nut. The existing problem is that the adjustment nut is located in the space between the positioning seat and the sub-machine upper housing, and the positioning seat is fixedly connected with the sub-machine upper housing. The sub-machine is only suitable for preparing soda having one concentration, but cannot meet the demand of consumers for soda with different CO2 concentrations.

### SUMMARY

The purpose of the present Patent is to provide a pressure-regulating-type sub-machine of a soda machine, which has the characteristic of convenient pressure adjustment of the pressure relief valve. The sub-machine is capable of preparing soda with different CO2 concentrations and is convenient to use, meeting the demand of consumers for soda with different CO2 concentrations.

The present Patent is realized as follows: a pressure-regulating-type sub-machine of a soda machine, comprising a positioning seat, a sub-machine upper housing, a sub-machine main body, a sub-machine bottom cover, a conical ring, a water bottle connecting port, a gas nozzle rod, and a soda bottle, wherein the sub-machine main body is provided with an air inlet seat, an air outlet cavity communicated with the air inlet seat, a safety valve and a pressure relief valve, the pressure relief valve comprises a pressure relief valve body, a valve core, a pressure spring and an adjustment nut which are provided on the sub-machine main body, the valve core, the pressure spring and the adjustment nut are provided in the pressure relief valve body from bottom to top, and the adjustment nut is screwed with the internal thread at the upper end of the pressure relief valve body; the sub-machine main body is provided in the sub-machine upper housing, the upper part of the sub-machine main body extends out of the upper housing, the outer edgefold of the conical ring is provided on the bottom plate of the counterbore surrounding the air outlet cavity, and the upper end of the water bottle connecting port presses the outer edgefold; the sub-machine bottom cover is connected with the lower end of the sub-machine upper housing and the water bottle connecting port, the positioning seat is connected with the sub-machine upper housing; the upper end of the gas nozzle rod passes through the conical ring and is connected with the air inlet cavity through an air inlet nut; wherein the sub-machine upper housing further comprises an arc-shaped guide cavity having an upper opening and provided at the edge of the top, a fixed shaft, an arc-shaped rack, a middle transmission wheel, and a driving gear;
the arc-shaped guide cavity has a radial outer side wall provided with a guide groove having an upper opening and a radial inner side wall provided with a through hole;
the radial outer side of the arc-shaped rack is provided with an operating rod;
the middle transmission wheel comprises an upper gear and a lower gear;
the arc-shaped rack is slidably fitted with the arc-shaped guide cavity, the middle transmission wheel is rotatably fitted with the fixed shaft, the arc-shaped rack meshes with the lower gear; the driving gear is fixedly connected to the upper end of the adjustment nut, the driving gear meshes with the upper gear, the operating rod is slidably fitted with the guide groove, and the lower end of the positioning seat and the guide groove form a guide hole.

According to the pressure-regulating-type sub-machine of a soda machine, the upper part of the internal thread of the pressure relief valve body is provided with a shaft sleeve;
a shaft body is provided between the adjustment nut and the driving gear, and the shaft body is fitted with the shaft sleeve.

According to the pressure-regulating-type sub-machine of a soda machine, the end of the operating rod is provided with a driving plate provided longitudinally, and the driving plate is opposite to the outer surface of the sub-machine upper housing. According to the pressure-regulating-type sub-machine of a soda machine, the pressure-regulating-type sub-machine of a soda machine further comprises a stopper and a pressure spring, wherein the stopper comprises a hemispherical head, a disc body and a rod part;
the bottom plate of the arc-shaped guide cavity is provided with a circular containing cavity with an upper opening, and the axial lower end of the arc-shaped rack is provided with a plurality of gear holes with spherical curved surfaces having lower openings;
the rod passes through the pressure spring, the disc body is located in the circular containing cavity, the lower end of the pressure spring is fitted with the bottom plate of the circular containing cavity, and the hemispherical head is fitted with the gear hole.

The present Patent relates to a pressure-regulating-type sub-machine of a soda machine. Since such a structure is used, the arc-shaped rack is rotated to drive the middle transmission wheel, and the middle transmission wheel drives the adjustment nut, thereby achieving the purpose of preparing soda having different concentrations by adjusting an elastic force of a spring, which is convenient to use.

### BRIEF DESCRIPTION OF THE DRAWINGS

FIG. 1 is a sectional view of the present Patent.
FIG. 2 is a view A-A of FIG. 1.

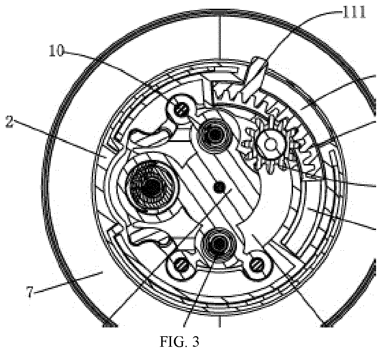

FIG. 3 is a view B-B of FIG. 2.

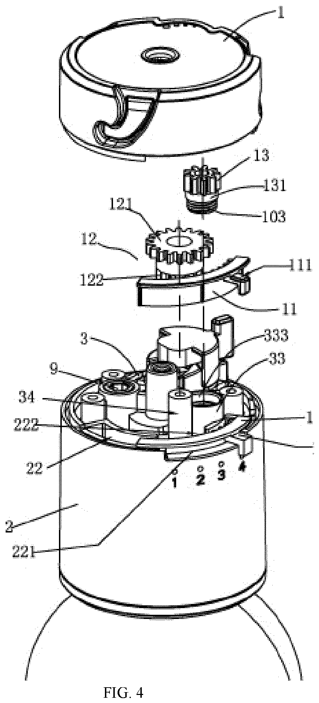

FIG. 4 is a first perspective exploded view of the present Patent.
FIG. 5 is a second perspective exploded view of the present Patent.
FIG. 6 is a perspective exploded view of a pressure relief valve according to the present Patent.
FIG. 7 is a perspective view of the present Patent.

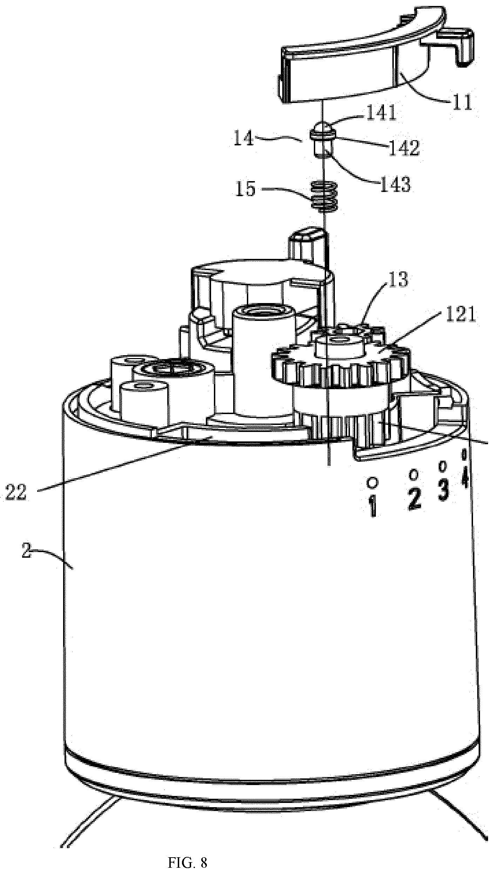

FIG. 8 is a partial perspective view of the present Patent.

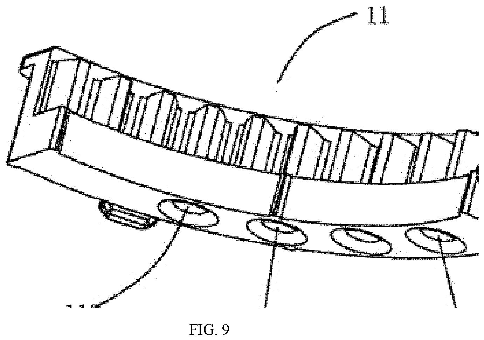

FIG. 9 is a perspective view of a circular rack according to the present Patent.

### DETAILED DESCRIPTION OF THE EMBODIMENTS

The present Patent will be further described with reference to the attached drawings.

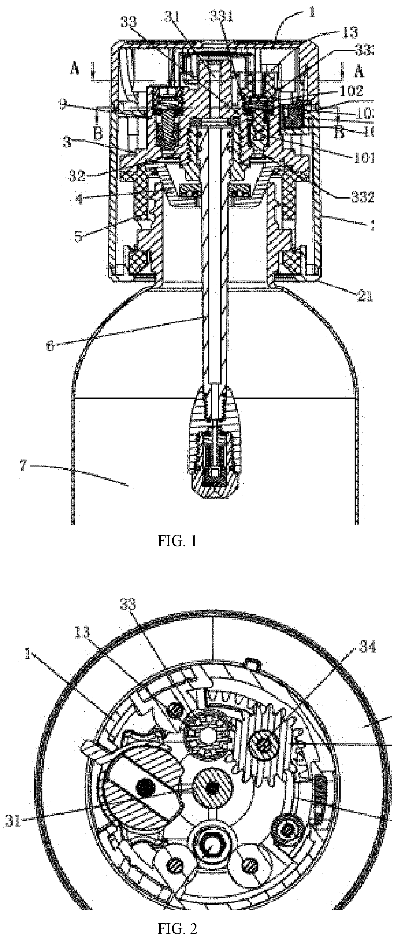

As shown in FIG. 1, a pressure-regulating-type sub-machine of a soda machine comprises a positioning seat 1, a sub-machine upper housing 2, a sub-machine main body 3, a sub-machine bottom cover 21, a conical ring 4, a water bottle connecting port 5, a gas nozzle rod 6, and a soda bottle 8. The sub-machine main body 3 is provided with an air inlet seat 31, an air outlet cavity 32 communicated with the air inlet seat, a safety valve 9 and a pressure relief valve 10. The pressure relief valve 10 comprises a pressure relief valve body 33, a valve core 101, a pressure spring 102 and an adjustment nut 103 which are provided on the sub-machine main body 3. The upper part of the pressure relief valve body 33 is provided with a threaded part 331, and the lower end thereof is provided with a valve core seat 332. The body part of the valve core 101 is provided with an axial protrusion 1011, and the end thereof is provided with a spring seat 1012. The valve core 332 is communicated with the soda bottle 8 through a conical ring 4. The valve core 101, the pressure spring 102 and the adjustment nut 103 are provided in the pressure relief valve body 33 from bottom to top. The head 1013 of the valve core 101 is fitted with the valve core seat 332. The axial protrusion 1011 is slidably fitted with the inner wall of the pressure relief valve body 33. The spring seat 1012 is inserted into the lower end of the pressure spring 102. The end of the body part is fitted with the pressure spring 102. The other end of the pressure spring is fitted with the counterbore 103A at the end of the adjustment nut 103. The adjustment nut 103 is screwed with the internal thread 331 at the upper end of the pressure relief valve body 33. The lower end of the valve core 10 is fitted with the valve core seat 332. The vent hole of the pressure relief valve body 33 is opposite to two adjacent axial protrusions 1011 on the valve core 101. The sub-machine main body 3 is provided in the sub-machine upper housing 2. The upper part of the sub-machine main body 3 extends out of the upper housing 2. The outer edgefold of the conical ring 4 is provided on the bottom plate of the counterbore surrounding the air outlet cavity 32. The upper end of the water bottle connecting port 4 presses the outer edgefold. The sub-machine bottom cover 21 is connected with the lower end of the sub-machine upper housing 2 and the water bottle connecting port 5. The positioning seat 1 is connected with the sub-machine upper housing 2. The upper end of the gas nozzle rod 6 passes through the conical ring 4 and is connected with the air inlet cavity 32 through an air inlet nut.

The sub-machine upper housing 2 further comprises an arc-shaped guide cavity 22 having an upper opening and provided at the edge of the top, a fixed shaft 34 provided on the sub-machine main body 3, an arc-shaped rack 11, a middle transmission wheel 12, and a driving gear 13.

The arc-shaped guide cavity 22 has a radial outer side wall provided with a guide groove 221 having an upper opening and a radial inner side wall provided with a through hole 222.

The radial outer side of the arc-shaped rack 11 is provided with an operating rod 111. The middle transmission wheel 12 comprises an upper gear 121 and a lower gear 122.

The arc-shaped rack 11 is slidably fitted with the arc-shaped guide cavity 22. The middle transmission wheel 12 is rotatably fitted with the fixed shaft 34. The arc-shaped rack 11 meshes with the lower gear 122. The driving gear 13 is fixedly connected to the upper end of the adjustment nut 103. The driving gear 13 meshes with the upper gear 121. The operating rod 111 is slidably fitted with the guide groove 221. The lower end of the positioning seat 1 and the guide groove 221 form a guide hole.

The pressure-regulating-type sub-machine of a soda machine further comprises a stopper 14 and a pressure spring 15, wherein the stopper 14 comprises a hemispherical head 141, a disc body 142 and a rod part 143.

The bottom plate of the arc-shaped guide cavity 22 is provided with a circular containing cavity with an upper opening, and the axial lower end of the arc-shaped rack 11 is provided with four gear holes 113 with spherical curved surfaces having lower openings.

The rod 143 passes through the pressure spring 15. The disc body 142 is located in the circular containing cavity. The lower end of the pressure spring 15 is fitted with the bottom plate of the circular containing cavity. The hemispherical head 141 is fitted with the gear hole 113.

The sub-machine upper housing 2 is further provided with a gear identifier 23, which is divided into four gears.

The upper part of the internal thread 331 of the pressure relief valve body 33 is provided with a shaft sleeve 333.

A shaft body 131 is provided between the adjustment nut 103 and the driving gear 13, and the shaft body 131 is fitted with the shaft sleeve 333.

The end of the operating rod 111 is provided with a driving plate 112 provided longitudinally, and the driving plate 112 is opposite to the outer surface of the sub-machine upper housing 2.

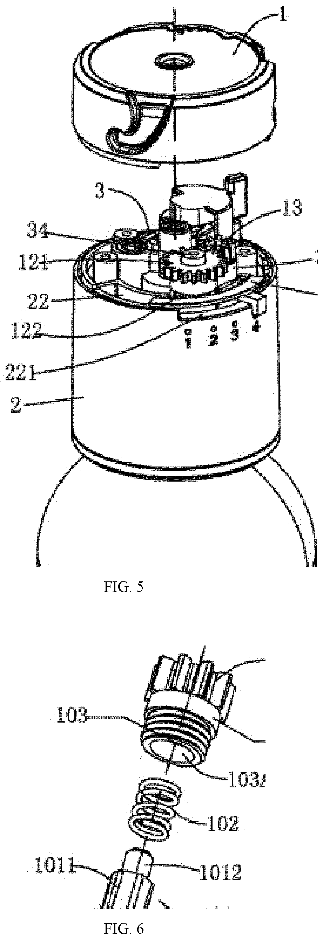

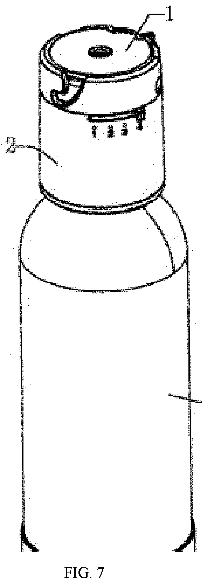

In the state shown in FIG. 5 and FIG. 7, when the driving plate 112 is operated, the circular rack rotates clockwise. The middle transmission wheel 12 rotates clockwise. The driving gear 13 rotates counterclockwise. The adjustment nut 103 moves upward. The elastic force of the pressure spring 102 decreases. The pressure in the soda machine 7 decreases, so that the pressure can be released, which can be used for preparing low-concentration soda.

In the state shown in FIG. 1, FIG. 5 and FIG. 7, the elastic force of the pressure spring 102 is maximal, and the pressure of the soda bottle 7 is maximal, which can be used for preparing high-concentration soda.

The above is only the preferred embodiment of the present Patent. It should be pointed out that several improvements and modifications can be made without departing from the principle of the present Patent for those skilled in the art, which is also regarded as the scope of protection of the present Patent.

## Claims

1. A pressure-regulating-type sub-machine of a soda machine, comprising a positioning seat, a sub-machine upper housing, a sub-machine main body, a sub-machine bottom cover, a conical ring, a water bottle connecting port, a gas nozzle rod, and a soda bottle, wherein the sub-machine main body is provided with an air inlet seat, an air outlet cavity communicated with the air inlet seat, a safety valve and a pressure relief valve, the pressure relief valve comprises a pressure relief valve body, a valve core, a pressure spring and an adjustment nut which are provided on the sub-machine main body, the valve core, the pressure spring and the adjustment nut are provided in the pressure relief valve body from bottom to top, and the adjustment nut is screwed with the internal thread at the upper end of the pressure relief valve body; the sub-machine main body is provided in the sub-machine upper housing, the upper part of the sub-machine main body extends out of the upper housing, the outer edgefold of the conical ring is provided on the bottom plate of the counterbore surrounding the air outlet cavity, and the upper end of the water bottle connecting port presses the outer edgefold; the sub-machine bottom cover is connected with the lower end of the sub-machine upper housing and the water bottle connecting port, the positioning seat is connected with the sub-machine upper housing; the upper end of the gas nozzle rod passes through the conical ring and is connected with the air inlet cavity through an air inlet nut; wherein the sub-machine upper housing further comprises an arc-shaped guide cavity having an upper opening and provided at the edge of the top, a fixed shaft, an arc-shaped rack, a middle transmission wheel, and a driving gear;
the arc-shaped guide cavity has a radial outer side wall provided with a guide groove having an upper opening and a radial inner side wall provided with a through hole;
the radial outer side of the arc-shaped rack is provided with an operating rod;
the middle transmission wheel comprises an upper gear and a lower gear;
the arc-shaped rack is slidably fitted with the arc-shaped guide cavity, the middle transmission wheel is rotatably fitted with the fixed shaft, the arc-shaped rack meshes with the lower gear; the driving gear is fixedly connected to the upper end of the adjustment nut, the driving gear meshes with the upper gear, the operating rod is slidably fitted with the guide groove, and the lower end of the positioning seat and the guide groove form a guide hole.

2. The pressure-regulating-type sub-machine of a soda machine according to claim 1, wherein: the upper part of the internal thread of the pressure relief valve body is provided with a shaft sleeve;
a shaft body is provided between the adjustment nut and the driving gear, and the shaft body is fitted with the shaft sleeve.

3. The pressure-regulating-type sub-machine of a soda machine according to claim 1, wherein the end of the operating rod is provided with a driving plate provided longitudinally, and the driving plate is opposite to the outer surface of the sub-machine upper housing.

4. The pressure-regulating-type sub-machine of a soda machine according to claim 1, further comprising a stopper and a pressure spring, wherein the stopper comprises a hemispherical head, a disc body and a rod part;
the bottom plate of the arc-shaped guide cavity is provided with a circular containing cavity with an upper opening, and the axial lower end of the arc-shaped rack is provided with a plurality of gear holes with spherical curved surfaces having lower openings;
the rod passes through the pressure spring, the disc body is located in the circular containing cavity, the lower end of the pressure spring is fitted with the bottom plate of the circular containing cavity, and the hemispherical head is fitted with the gear hole.
